(19)

**Europäisches Patentamt**

**European Patent Office**

**Office européen des brevets**

(11) **EP 4 378 982 A1**

(12) **EUROPEAN PATENT APPLICATION**

(43) Date of publication:
**05.06.2024  Bulletin 2024/23**

(21) Application number: **23207964.0**

(22) Date of filing: **06.11.2023**

(51) International Patent Classification (IPC):
***C08J 5/18*** (2006.01)

(52) Cooperative Patent Classification (CPC):
**C08J 5/18;** C08G 63/183; C08G 63/20;
C08J 2367/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2022  KR 20220164776
16.10.2023  KR 20230137531**

(71) Applicants:
• **SK Innovation Co., Ltd.**
**Seoul 03188 (KR)**
• **SK Geo Centric Co., Ltd.**
**Jongno-gu**
**Seoul 03161 (KR)**
• **Kolon Industries, Inc.**
**Seoul 07793 (KR)**

(72) Inventors:
• **KIM, Jeong Sun**
**07793 Seoul (KR)**
• **IM, Su Jin**
**07793 Seoul (KR)**
• **LEE, Sung Won**
**34124 Daejeon (KR)**
• **KIM, Ki Yup**
**34124 Daejeon (KR)**
• **KIM, Do Young**
**34124 Daejeon (KR)**
• **NAM, Joo Hyun**
**34124 Daejeon (KR)**
• **PARK, Ji Hae**
**34124 Daejeon (KR)**

(74) Representative: **Frick, Robert**
**Lorenz Seidler Gossel**
**Rechtsanwälte Patentanwälte**
**Partnerschaft mbB**
**Widenmayerstraße 23**
**80538 München (DE)**

(54) **BIODEGRADABLE POLYESTER POLYMER AND EASY-TEAR FILM INCLUDING THE SAME**

(57)    Provided are a biodegradable polyester polymer and an easytear film including the same, and a biodegradable film which may be easily opened in a controlled manner without an excessive force while effectively protecting a product inside the packaging may be provided using a biodegradable polyester polymer having excellent tearability while having excellent mechanical properties.

**EP 4 378 982 A1**

## Description

### TECHNICAL FIELD

The present invention relates to a biodegradable polyester polymer and an easy-tear film including the same.

### BACKGROUND

Since a packaging material basically has the purpose of protecting products inside, it should be strong enough not to be easily broken or torn upon instantaneous shock. In this aspect, it may be said that a strong film has excellent physical properties, but when a packaging film such as a packaging film for food or a protective film which surrounds a product and should be essentially removed before use has strong physical properties, an excessive force is required to tear a film for product opening, which causes great inconvenience to consumers.

In order to solve the problem, a multilayer film in which a film having excellent tear resistance and a film having poor tear resistance are laminated was manufactured, thereby imparting tearability to a film, but no matter how thin the film having excellent tear resistance was made, the tear resistance of the entire multilayer film was not reduced, so that an effect of improving tearability to be desired was insignificant, and since the thickness of the multilayer became thick, it was difficult to substantially apply the film to a product.

Meanwhile, it is difficult to collect a conventional packaging material film, so that low recycling efficiency is shown, and the film has been recognized as the cause of polluting the environment due to its indiscreet use. In order to solve the problem, many companies are conducting research and development by replacing conventional general polymers with a biodegradable polymer to use as a packaging film, thereby lowering the environmental burden.

Therefore, the research and development of a degradable film which has excellent mechanical properties to effectively protect a product inside the packaging and may be easily opened in a controlled manner without an excessive force is needed.

### SUMMARY

The present dinvention aims to providing a biodegradable polyester polymer having excellent tearability while having excellent mechanical properties, and a method of manufacturing the same.

The present invention further aims to providing a biodegradable film manufactured using the biodegradable polyester polymer described above.

Against this background, the present invention proposes a biodegradable polyester polymer, which is prepared from a polymerizable composition including: an aliphatic dicarboxylic acid, an aromatic dicarboxylic acid, an aliphatic diol, and a branching agent, wherein the ratio of the z-average molecular weight (Mz) and the weight average molecular weight (Mw) of the biodegradable polyester polymer satisfies the following Equation 1:

$$[Equation\ 1]$$

$$2 < Mz/Mw$$

In an embodiment, the biodegradable polyester polymer may have a polydispersity index (PDI, Mw/Mn) of 2.5 or more.

In an embodiment, the aliphatic dicarboxylic acid may be a $C_{2-20}$ aliphatic dicarboxylic acid.

In an embodiment, the aromatic dicarboxylic acid may be a $C_{6-30}$ aromatic dicarboxylic acid.

In an embodiment, the aliphatic diol may be a $C_{2-20}$ aliphatic diol.

In an embodiment, the branching agent may be a polyol compound having 3 or more functional groups.

In an embodiment, the ratio of the z-average molecular weight (Mz) and the weight average molecular weight (Mw) of the biodegradable polyester polymer may satisfy the following Equation 2:

$$[Equation\ 2]$$

$$2 < Mz/Mw < 15$$

In an embodiment, the biodegradable polyester polymer may have a z-average molecular weight of 200,000 to 1,000,000 g/mol.

In an embodiment, the biodegradable polyester polymer may have a number average molecular weight (Mn) of 55,000 g/mol or less and a weight average molecular weight (Mw) of 110,000 g/mol or more.

In an embodiment, the biodegradable polyester polymer may be polybutylene adipate terephthalate (PBAT), polybutylene succinate butylene terephthalate (PBAST), or polybutylene sebacate terephthalate (PBSeT).

The invention further proposes a biodegradable film including the biodegradable polyester polymer according to the invention.

The biodegradable film may have a tear strength in a MD direction of 2.5 g/pm or less.

The biodegradable film may have a tear strength in a TD direction which is 5 times or more the tear strength in a MD direction.

The biodegradable film may be used as a pharmaceutical packaging material, a food packaging material, a packaging film for product protection, a mulching film, or a shrink film.

Other features and aspects will be apparent from the following detailed description, the drawings, and the claims.

## DETAILED DESCRIPTION OF EMBODIMENTS

Hereinafter, the present invention will be described in more detail.

Units used in the present specification without particular mention are based on weights, and as an example, a unit of % or ratio refers to a wt% or a weight ratio and wt% refers to wt% of any one component in a total composition, unless otherwise defined.

In order to achieve the above objects, the present invention provides a biodegradable polyester polymer, which is prepared from a polymerizable composition including: an aliphatic dicarboxylic acid, an aromatic dicarboxylic acid, an aliphatic diol, and a branching agent, and whose z-average and weight average molecular weights satisfy the following Equation 1. More specifically, the z-average and weight average molecular weights of the biodegradable polyester polymer may satisfy the following Equations 2, 3, or 4:

$$[\text{Equation 1}]$$

$$2 < Mz/Mw$$

$$[\text{Equation 2}]$$

$$2 < Mz/Mw < 15$$

$$[\text{Equation 3}]$$

$$2 < Mz/Mw < 5$$

$$[\text{Equation 4}]$$

$$2.5 < Mz/Mw < 4$$

When the biodegradable polyester polymer satisfying Equation 1, specifically Equation 2, 3, or 4 is molded into a film or a sheet, its tear strength in one direction is significantly lower than the tear strength in the other direction, and thus, it may be easily torn in one direction, and thus, the characteristic as such may be applied to an easy-tear packaging.

In the biodegradable polyester polymer according to an embodiment, the biodegradable polyester polymer may be a polymer prepared by a common or known polyester polymerization method from a polymerizable composition including a dicarboxylic acid compound including an aliphatic dicarboxylic acid and an aromatic dicarboxylic acid; an aliphatic diol; and a branching agent, and furthermore, may be prepared by a polymerization method selected without limitation from known polymerization methods such as a continuous or batchwise polymerization method.

In the biodegradable polyester polymer according to an embodiment, the aliphatic dicarboxylic acid may be a $C_{2-40}$ aliphatic dicarboxylic acid, and specifically, the aliphatic dicarboxylic acid may be a $C_{2-20}$ aliphatic dicarboxylic

acid, and as an example, one or a combination of two or more selected from the group consisting of oxalic acid, malonic acid, succinic acid, glutaric acid, adipic acid, pimelic acid, sebacic acid, fumaric acid, azelaic acid, itaconic acid, 1,9-nonanedicarboxylic acid, 1,10-decanedicarboxylic acid, dimeric fatty acids, and their anhydride derivatives, and more specifically, may be succinic acid, adipic acid, sebacic acid, or a mixture thereof.

In the biodegradable polyester polymer according to an embodiment, the aromatic dicarboxylic acid may be a $C_{6-50}$ aromatic dicarboxylic acid, specifically, a $C_{6-30}$ aromatic dicarboxylic acid, and as an example, may be one or a combination of two or more selected from the group consisting of phthalic acid, isophthalic acid, terephthalic acid, dimethyl phthalate, diethyl phthalate, dimethyl isophthalate, diethyl isophthalate, dimethyl terephthalate, and diethyl terephthalate.

In addition, in the dicarboxylic acid compound, the aliphatic dicarboxylic acid and the aromatic dicarboxylic acid may satisfy a mole ratio of 1 to 9 : 9 to 1, specifically 3 to 7 : 7 to 3.

In the biodegradable polyester polymer according to an embodiment, the aliphatic diol may be a $C_{2-20}$ aliphatic diol, specifically a $C_{2-15}$ aliphatic diol, and as an example, may be one or a combination of two or more selected from the group consisting of ethylene glycol, propylene glycol, neopentyl glycol, 1,3-propanediol, 1,4-butanediol, 1,5-pentanediol, 1,6-hexanediol, 1,2-octanediol, 1,6-octanediol, 1,9-nonanediol, 1,2-decanediol, and 1,10-decanediol, and more specifically, may be one or a combination of two or more selected from the group consisting of ethylene glycol, propylene glycol, 1,3-propanediol, and 1,4-butanediol, 1,6-hexanediol.

In addition, the aliphatic diol and the dicarboxylic acid compound may satisfy a mole ratio of 1 to 3 : 1, specifically 1.2 to 2.5 : 1.

In the biodegradable polyester polymer according to an embodiment, the branching agent may serve to adjust the molecular weight distribution of the biodegradable polyester polymer according to an exemplary embodiment of the present invention to be large, and in particular, may adjust Mz to satisfy Equation 1. The branching agent may have 3 or more functional groups, and specifically, the branching agent may be a polyol compound having 3 or more hydroxyl groups. More specifically, the branching agent may be a polyol compound having 4 or more hydroxyl groups. The branching agent may be one or a combination of two or more selected from the group consisting of tartaric acid, citric acid, malic acid, trimethylolpropane, trimethylolethane, pentaerythritol, polyethertriol, glycerol, trimesic acid, trimellitic acid, trimellitic anhydride, pyromellitic acid, and pyromellitic dianhydride, and more specifically, may be glycerol or pentaerythritol.

In addition, the branching agent may be included at 0.01 to 2 wt%, specifically 0.05 to 1 wt%, and more specifically 0.1 to 0.5 wt% with respect to the polymerizable composition.

In the biodegradable polyester polymer according to an embodiment, the biodegradable polyester polymer may have a number average molecular weight (Mn) of 100,000 g/mol or less, specifically 55,000 g/mol or less, and more specifically 30,000 to 55,000 g/mol.

In the biodegradable polyester polymer according to an embodiment, the biodegradable polyester polymer may have a weight average molecular weight (Mw) of 100,000 g/mol or more, specifically 110,000 g/mol or more, and more specifically 120,000 to 200,000 g/mol.

In the biodegradable polyester polymer according to an embodiment, the biodegradable polyester polymer may have a z-average molecular weight (Mz) of 300,000 to 5,000,000 g/mol, specifically 200,000 to 1,000,000 g/mol, and more specifically 250,000 to 800,000 g/mol.

In the biodegradable polyester polymer according to an embodiment, the biodegradable polyester polymer may have a polydispersity index (PDI, Mw/Mn) of 2.2 or more or 2.5 or more, specifically 2.5 to 10, and more specifically 2.5 to 7.

When the biodegradable polyester polymer according to an embodiment satisfies the above range, a biodegradable film having a significant difference between tear strengths in TD and MD directions may be manufactured, and it may be widely applied to the field of an easy-tear packaging.

In the biodegradable polyester polymer according to an embodiment, the biodegradable polyester polymer may be a polymer prepared from the polymerizable composition described above, and specifically, may be polybutylene adipate terephthalate (PBAT), polybutylene succinate butylene terephthalate (PBAST), or polybutylene sebacate terephthalate (PBSeT).

The present invention further relates to a biodegradable film including the biodegradable polyester polymer according to the invention. The film may have a thickness of 1 to 500 um, specifically 10 to 200 um, and the thickness may be adjusted according to the intended use. In addition, the biodegradable film may be processed by a common and known processing method which is used in film processing, and the film may be manufactured by, as an example, a casting process, an extrusion process, a bubble blowing process, a calendering process, or a sintering process. In the film processing, the film may be drawn in one direction, and the drawing direction is referred to as a length direction or a machine direction (MD) and a direction perpendicular to the drawing direction is referred to as a width direction or a transverse direction (TD), and the mechanical properties such as tensile strength and tear strength measured in the TD direction and the MD direction of the biodegradable film may be different from each other. Specifically, the mechanical properties in the TD direction may represent a better value, and more specifically, may represent a value which is 2 times, 3 times, 4 times, or 5 times or higher than that in the MD direction.

In the biodegradable film according to an embodiment, the draw ratio of the film may be 1 to 30 times, 1.1 to 20 times, or 2 to 15 times.

In the biodegradable film according to an embodiment, the biodegradable film may have a tear strength in the MD direction of 3.0 g/pm or less, specifically 2.5 g/pm or less, and more specifically 0.2 to 1.5 g/pm under a thickness condition of 5012 um. In addition, the tear strength in the TD direction may be 5.0 g/um or more, specifically 8.0 g/um or more, and more specifically 9.0 to 25.0 g/pm.

In the biodegradable film according to an embodiment, the biodegradable film may have the tear strength in the TD direction which is 5 times or more, specifically 10 times or more, more specifically 12 times or more, and unlimitedly 30 times or less the tear strength in the MD direction. The biodegradable film may effectively implement easy-tear properties due to a significant difference in the tear strength depending on the direction.

In the biodegradable film according to an embodiment, the biodegradable film may be widely used for packaging, and specifically, may be used for a pharmaceutical packaging material, a food packaging material, a packaging film for product protection, a mulching film, or a shrink film.

Hereinafter, the present invention will be described in more detail with reference to the examples and the comparative examples.

The physical properties of the following examples and comparative examples were measured by the following methods.

[Method of evaluating physical properties]

1. Molecular weight (Mw, Mn, and Mz) [g/mol] : A weight average molecular weight (Mw), a number average molecular weight (Mn), and a z-average molecular weight (Mz) were measured using GPC (Alliance HPLC, Waters). Tetrahydrofuran as a solvent and polystyrene (EasiCal Polystyrene, Pre-prepared Calibration Kits) as a standard were used, and the analysis was performed at an operating temperature of 35°C and a flow rate of 1 mL/min. In addition, a polydispersity index (PDI) value was calculated from Mw and Mn, and specifically, Mn, Mw, and Mz are defined as follows:

$$M_n = \frac{\sum N_i M_i}{\sum N_i} \qquad M_w = \frac{\sum N_i M_i^2}{\sum N_i M_i} \qquad M_z = \frac{\sum N_i M_i^3}{\sum N_i M_i^2}$$

wherein $M_i$ is a molecular weight of a molecule, and $N_i$ is the number of molecules having a molecular weight of $M_i$.

Other specific conditions for measuring a molecular weight are as follows:

[0050] - Analytical instrument: a GPC system (model name: Agilent, 1260 Infinity II High-Temperature GPC System) in which two columns (model name: Agilent, PLGEL MIXED-C 7.5×300 mm, 5 um) were connected, a GPC flow rate was set to 1 mL/min, and a refractive index detector was connected was used.

[0051] - Sample preparation: 1.5 mg of a polymer sample and 1 ml of tetrahydrofuran were added to a vial, and stirring was performed at room temperature for 1 hour or more by a shaking mixer for dissolving. 100 $\mu$L of the thus-prepared solution was injected into the GPC.

2. Tear strength

The thus-prepared biodegradable polyester polymer was manufactured into a film having a thickness of 50 um, and the Elmendorf tear strength was measured in accordance with ASTM D1922. Specifically, the conditions of a temperature of 23°C, a relative humidity of 50%, and the tear strength in a length direction and the tear strength in a width direction of the film are shown in Table 2 as a MD tear strength and a TD tear strength, respectively.

[Examples 1 to 6, and Comparative Examples 1 and 2]

6780 g of 1,4-butanediol, 3950 g of terephthalic acid, and 3850 g of adipic acid were added, and 16 g of an aqueous solution of a citric acid chelate-based titanium compound was added. The reaction temperature (1) was heated up to 230°C, and 6.0 g of a phosphorous acid as a phosphorus-based stabilizer was added. The reaction was performed for 3 hours while a reaction tube was maintained at normal pressure and water was removed with a rectifying tower, thereby preparing an oligomer.

Thereafter, a branching agent was added according to the type and the content listed in the following Table 1, and 10 g of tetrabutyl titanate as a polycondensation catalyst was added. The pressure in the reaction tube was lowered stepwise to 1 torr or less while the reaction temperature (2) was raised to 240°C for 1 hour, and excessive 1,4-butanediol was removed by distillation. The reaction was terminated when a discharge load was reached, and then polyester was pelletized using an underwater pelletizer and dried, thereby finally obtaining a biodegradable polyester polymer. Mn, Mw, and Mz of the obtained biodegradable polyester polymer were measured and are shown in the following Table 1.

The obtained biodegradable polyester polymer was processed through a bubble blowing process at a temperature of 150 to 200°C and manufactured into a 50 um film. The physical properties of the thus-manufactured film were measured, and are shown in the following Table 2:

[Table 1]

|  | Branching agent | Content | Mn [g/mol] | Mw [g/mol] | Mz [g/mol] | PDI (Mw/Mn) | Mz/Mw |
|---|---|---|---|---|---|---|---|
| Example 1 | Glycerol | 14.5 g (1,OOOppm) | 50,245 | 132,840 | 274,560 | 2.6 | 2.1 |
| Exanple 2 | Glycerol | 21.8 g (1,500ppm) | 47,693 | 122,980 | 265,270 | 2.6 | 2.2 |
| Exanple 3 | Glycerol | 29 g (2,000ppm) | 46,000 | 141,000 | 395,000 | 3.1 | 2.8 |
| Exanple 4 | Pentaerythritol | 14.5 g (1,000ppm) | 51,832 | 145,620 | 403,970 | 2.8 | 2.8 |
| Exanple 5 | Pentaerythritol | 21.8 g (1,500ppm) | 42,804 | 152,880 | 539,560 | 3.6 | 3.5 |
| Exanple 6 | Pentaerythritol | 29 g (2,000ppm) | 33,471 | 142,280 | 560,760 | 4.3 | 3.9 |
| Comparative Exanple 1 | Glycerol | 7 g (500ppm) | 59,100 | 117,300 | 203,600 | 2.0 | 1.7 |
| Comparative Exanple 2 | Pentaerythritol | 7 g (500ppm) | 51,322 | 108,800 | 210,400 | 2.1 | 1.9 |

[Table 2]

|  | MD tear strength [g/μm] | TD tear strength [g/μm] | TD/MD (times) |
|---|---|---|---|
| Example 1 | 2.1 | 17.6 | 8.4 |
| Example 2 | 1.4 | 16.0 | 11.4 |
| Example 3 | 1.2 | 14.7 | 12.3 |
| Example 4 | 1.9 | 12.5 | 6.6 |
| Example 5 | 0.9 | 11.1 | 12.3 |
| Example 6 | 0.8 | 9.6 | 12.0 |
| Comparative Example 1 | 3.0 | 11.8 | 3.9 |
| Comparative Example 2 | 2.8 | 12.7 | 4.5 |

As seen from Tables 1 and 2, the biodegradable polyester polymer of Example 5 had Mz/Mw of 3.5, and thus, the MD tear strength was measured as 0.9 g/pm and the TD tear strength was measured as 11.1 g/pm. It was confirmed therefrom that since the TD tear strength was about 12 times better than the MD tear strength, easy-tearing which is a characteristic of being easily torn in one direction may be effectively implemented. In contrast, in Comparative Examples 1 and 2, it was confirmed that Mz/Mw was all less than 2.0, and thus, a difference between the TD tear strength and the MD tear strength was about 4 times in Comparative Example 1 and about 4.5 in Comparative Example 2, both of which showed a difference in physical properties of 10 times or less.

The present invention relates to a biodegradable polyester polymer having excellent tearability in one direction while having excellent mechanical properties, and a biodegradable film using the same. The biodegradable polyester polymer has a difference of 5 times or more between a TD tear strength and a MD tear strength, thereby showing excellent tear resistance in one direction and excellent tearability in the other direction. In addition, the biodegradable film manufactured using the polymer may be easily opened in a controlled manner without an excessive force while effectively protecting a product inside the packaging.

**Claims**

1. A biodegradable polyester polymer,

    which is prepared from a polymerizable composition including: an aliphatic dicarboxylic acid, an aromatic dicarboxylic acid, an aliphatic diol, and a branching agent;
    wherein the z-average molecular weight (Mz) and the weight average molecular weight (Mw) of the biodegradable polyester polymer, when determined as specified in the description, satisfy the following Equation 1:

$$[\text{Equation 1}]$$

$$2 < Mz/Mw$$

2. The biodegradable polyester polymer of claim 1, wherein the biodegradable polyester polymer has a polydispersity index (PDI, Mw/Mn) of 2.5 or more.

3. The biodegradable polyester polymer of any preceding claim, wherein the aliphatic dicarboxylic acid is a $C_{2-20}$ aliphatic dicarboxylic acid.

4. The biodegradable polyester polymer of any preceding claim, wherein the aromatic dicarboxylic acid is a $C_{6-30}$ aromatic dicarboxylic acid.

5. The biodegradable polyester polymer of any preceding claim, wherein the aliphatic diol is a $C_{2-20}$ aliphatic diol.

6. The biodegradable polyester polymer of any preceding claim, wherein the branching agent is a polyol compound having 3 or more functional groups.

7. The biodegradable polyester polymer of any preceding claim, wherein the z-average molecular weight (Mz) and the weight average molecular weight (Mw) of the biodegradable polyester polymer, when determined as specified in the description, satisfy the following Equation 2:

$$[\text{Equation 2}]$$

$$2 < Mz/Mw < 15$$

8. The biodegradable polyester polymer of any preceding claim, wherein the biodegradable polyester polymer has a z-average molecular weight, when determined as specified in the description, of 200,000 to 1,000,000 g/mol.

9. The biodegradable polyester polymer of any preceding claim, wherein the biodegradable polyester polymer has a number average molecular weight (Mn), when determined as specified in the description, of 55,000 g/mol or less and a weight average molecular weight (Mw), when determined as specified in the description, of 110,000 g/mol or more.

10. The biodegradable polyester polymer of any preceding claim, wherein the biodegradable polyester polymer is polybutylene adipate terephthalate (PBAT), polybutylene succinate butylene terephthalate (PBAST), or polybutylene sebacate terephthalate (PBSeT).

11. A biodegradable film comprising the biodegradable polyester polymer of any one of claims 1 to 10.

12. The biodegradable film of claim 11, wherein the biodegradable film has a tear strength in a machine dimension (MD) direction, when determined as specified in the description, of 2.5 g/pm or less.

**13.** The biodegradable film of claim 11 or 12, wherein the biodegradable film has a tear strength in a <u>transverse direction (TD)</u> direction, when determined as specified in the description, which is 5 times or more the tear strength in the <u>machine dimension (MD)</u> direction, when determined as specified in the description.

**14.** Use of a biodegradable film of any one of claims 11 to 13 as a pharmaceutical packaging material, a food packaging material, a packaging film for product protection, a mulching film, or a shrink film.

Europäisches
Patentamt

European
Patent Office

Office européen
des brevets

# EUROPEAN SEARCH REPORT

Application Number

**EP 23 20 7964**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 231 830 A1 (LOTTE FINE CHEMICAL CO LTD [KR]) 18 October 2017 (2017-10-18)<br>* paragraphs [0074] - [0076]; examples 1-8 *<br>* tables 1,2 *<br>* paragraphs [0050], [0058] *<br>----- | 1-14 | INV.<br>C08J5/18 |
| X | US 4 426 478 A (NOYES PAUL R [US] ET AL) 17 January 1984 (1984-01-17)<br>* examples 2-5,8,10,11 *<br>----- | 1-7,11 | |
| X | US 5 661 193 A (KHEMANI KISHAN CHAND [US]) 26 August 1997 (1997-08-26)<br>* example 2 *<br>* column 1, lines 13-24 *<br>* column 6, lines 1-19 *<br>----- | 1-14 | |
| A | WO 2021/130106 A1 (NOVAMONT SPA [IT]) 1 July 2021 (2021-07-01)<br>* claims *<br>* example 1 *<br>----- | 1-14 | |

TECHNICAL FIELDS SEARCHED (IPC)

C08J
C08G

The present search report has been drawn up for all claims

| Place of search | Date of completion of the search | Examiner |
|---|---|---|
| The Hague | 9 April 2024 | Schlicke, Benedikt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 7964

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2024

| Patent document cited in search report | | Publication date | Patent family member(s) | | Publication date |
|---|---|---|---|---|---|
| EP 3231830 | A1 | 18-10-2017 | AU 2014413947 A1 | | 11-05-2017 |
| | | | EP 3231830 | A1 | 18-10-2017 |
| | | | JP 2017537183 | A | 14-12-2017 |
| | | | WO 2016093395 | A1 | 16-06-2016 |
| US 4426478 | A | 17-01-1984 | NONE | | |
| US 5661193 | A | 26-08-1997 | EP 0898591 | A1 | 03-03-1999 |
| | | | JP 2000510189 | A | 08-08-2000 |
| | | | JP 2007146193 | A | 14-06-2007 |
| | | | US 5661193 | A | 26-08-1997 |
| | | | US 6020393 | A | 01-02-2000 |
| | | | WO 9743329 | A1 | 20-11-1997 |
| WO 2021130106 | A1 | 01-07-2021 | BR 112022012661 | A2 | 06-09-2022 |
| | | | CA 3165622 | A1 | 01-07-2021 |
| | | | CN 115066284 | A | 16-09-2022 |
| | | | EP 4081320 | A1 | 02-11-2022 |
| | | | IT 201900025471 | A1 | 24-06-2021 |
| | | | JP 2023512421 | A | 27-03-2023 |
| | | | KR 20220125263 | A | 14-09-2022 |
| | | | US 2023049166 | A1 | 16-02-2023 |
| | | | WO 2021130106 | A1 | 01-07-2021 |

EPO FORM P0459

For more details about this annex : see Official Journal of the European Patent Office, No. 12/82